# EUROPÄISCHE PATENTANMELDUNG

(11) **EP 0 524 440 A1**
(43) Veröffentlichungstag der Anmeldung: **27.01.1993**
(21) Anmeldenummer: 92110523.5
(22) Anmeldetag: 23.06.1992
(51) Int. Cl.: B60T 8/94, B60T 8/26

(54) **Hydraulische Bremsanlage, insbesondere für Kraftfahrzeuge**

(30) Priorität: 22.07.1991 DE 4124241
(71) Anmelder: ROBERT BOSCH GMBH, 70442 Stuttgart (DE)
(72) Erfinder: Engfer, Ortwin, W-7000 Stuttgart 31 (DE)

(57) **Zusammenfassung**

Es ist bereits eine hydraulische Bremsanlage mit einer Blockierschutzeinrichtung für Kraftfahrzeuge bekannt, die in ihrem Hinterachsbremskreis einen Druckbegrenzer aufweist, der bei einem Ausfall der Blockierschutzeinrichtung den Druck in den Hinterradbremszylindern auf einen vorgegebenen Bremsdruck begrenzt, auch wenn die Hinterradbremsen einen größeren Anteil an der Abbremsung des Fahrzeugs erbringen können.

Die erfindungsgemäße hydraulische Bremsanlage mit einer Blockierschutzeinrichtung hat zumindest eine auf Radbremszylinder (5, 7) wirkende Drucksteuereinrichtung (9), welche die Funktionen eines Magnetventils und eines federbelasteten Rückschlagventils aufweist. Die Drucksteuereinrichtung (9) reduziert bei einem Ausfall der Blockierschutzeinrichtung den Druck des Druckmittels in den Radbremszylindern um einen festen Wert.

Die Drucksteuereinrichtung (9) eignet sich besonders für die Anwendung in Hinterachsbremskreisen.

## Beschreibung

### Stand der Technik

Die Erfindung geht aus von einer hydraulischen Bremsanlage mit einer Blockierschutzeinrichtung, insbesondere für Kraftfahrzeuge, nach der Gattung des Hauptanspruches. Aus der DE 39 31 858 A1 ist bereits eine hydraulische Bremsanlage mit einer im Hinterachsbremskreis eines Kraftfahrzeuges vorgesehenen Drucksteuereinrichtung in Form eines Druckbegrenzers bekannt, der bei einem Ausfall der Blockierschutzeinrichtung den Bremsdruck in den Hinterradbremszylindern auf einen vorgegebenen Bremsdruck begrenzt und ein Blockieren der Hinterräder vor dem Blockieren der Vorderräder des Fahrzeuges verhindert. Ein solcher Druckbegrenzer hat den schwerwiegenden Nachteil, daß er den Bremsdruck an der Hinterachse auf einen festen Wert begrenzt, auch wenn die Hinterachsbremsen einen größeren Anteil an der Abbremsung des Fahrzeuges erbringen könnten. Dieser Druckbegrenzer hat darüberhinaus den Nachteil eines komplizierten Aufbaus, einer aufwendigen Montage und einer großen Baulänge. Die Federkraft der Rückstellfeder des Magnetventils ist nicht einstellbar. Zudem weist der bekannte Druckbegrenzer hohe Herstellkosten auf.

### Vorteile der Erfindung

Die erfindungsgemäße Bremsanlage mit den kennzeichnenden Merkmalen des Hauptanspruches hat demgegenüber den Vorteil einer sehr einfachen und kompakten Bauweise der Drucksteuereinrichtung, die sich problemlos z. B. in ein sogenanntes Hydroaggregat der Bremsanlage integrieren läßt. Die Drucksteuereinrichtung ist auf einfache und kostengünstige Art und Weise herstellbar. Sie wirkt als Ventil, bei dem der Ausgangsdruck im unerregten Zustand der Magnetspule um einen fest eingestellten Wert gegenüber dem Eingangsdruck verringert ist. Eine derartige Drucksteuereinrichtung ist in vorteilhafter Weise einem Hinterachsbremskreis zuzuordnen, weil sie bei der Anwendung hoher Bremsdrücke in der Bremsanlage den Anteil der Hinterachse an der Abbremsung vergrößert.

Durch die in den Unteransprüchen aufgeführten Maßnahmen sind vorteilhafte Weiterbildungen und Verbesserungen der im Hauptanspruch angegebenen Bremsanlage möglich.

Um ein Rückströmen des Druckmittels vom Radbremszylinder zu dem Hauptbremszylinder ohne Erregen der Magnetspule zu ermöglichen, ist es vorteilhaft, wenn die Drucksteuereinrichtung parallel zu Ventilsitz und Ventilschließglied ein zweites Rückschlagventil mit Durchlaßrichtung vom Radbremszylinder zum Hauptbremszylinder aufweist. Dieses stellt auch bei Ausfall der Magnetbetätigung eine Druckentlastung des Radbremszylinders sicher.

Dabei ist es besonders vorteilhaft, wenn die Drucksteuereinrichtung wenigstens teilweise von einer Aufnahmebohrung eines Gehäuseblockes aufgenommen ist und die Aufnahmebohrung einen Abschnitt der Bremsleitung bildet, und wenn das zweite Rückschlagventil als Manschette ausgebildet ist, die an dem Umfang eines Gehäusebauteils der Drucksteuereinrichtung und mit einer Dichtlippe an der Wandung der Aufnahmebohrung anliegt . Auf diese Weise ist das zweite Rückschlagventil einfach und kostengünstig und vor allem sehr kompakt ausbildbar.

Von Vorteil ist es, wenn die Federkraft der am Anker angreifenden Rückstellfeder mittels einer in eine Längsbohrung der Drucksteuereinrichtung einpreßbaren Einstellkugel einstellbar ist, so daß die Federkraft der Rückstellfeder auf einfache Art und Weise auch an der ansonsten fertig montierten Drucksteuereinrichtung eingestellt werden kann.

### Zeichnung

Ausführungsbeispiele der Erfindung sind in der Zeichnung vereinfacht dargestellt und in der nachfolgenden Beschreibung näher erläutert. Es zeigen Figur 1 ein Schaltschema einer hydraulischen Bremsanlage mit einer aus einem Magnetventil, einem ersten und einem zweiten Rückschlagventil bestehenden Drucksteuereinrichtung, Figur 2 ein erstes und Figur 3 ein zweites erfindungsgemäßes Ausführungsbeispiel einer Drucksteuereinrichtung.

### Beschreibung der Ausführungsbeispiele

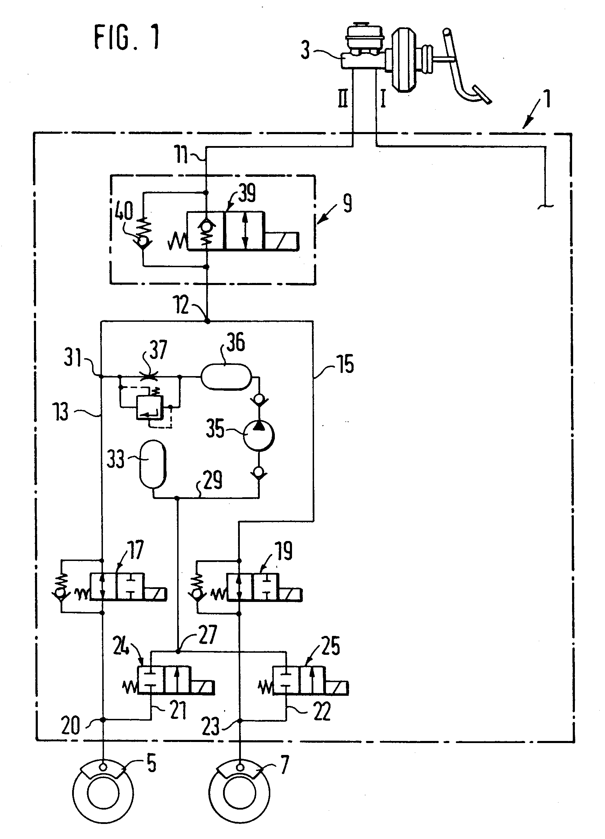

Die in Figur 1 beispielhaft dargestellte hydraulische Kraftfahrzeugbremsanlage 1 mit einer Blockierschutzeinrichtung hat einen pedalbetätigbaren Hauptbremszylinder 3, an den zwei Bremskreise I und II angeschlossen sind. Auf die Darstellung des Bremskreises I, der z. B. auf die Vorderradbremsen des Fahrzeuges wirkt, wurde in der Figur 1 verzichtet; er kann in bekannter Art und Weise ausgeführt sein.

Der Bremskreis II weist eine vom Hauptbremszylinder 3 zu Radbremszylindern 5 und 7 von Hinterradbremsen des Fahrzeuges führende Bremsleitung 11 auf. Die Bremsleitung 11 verzweigt sich an einem Anschlußpunkt 12 in einen ersten Bremsleitungszweig 13 und in einen zweiten Bremsleitungszweig 15, der dem Radbremszylinder 5 bzw. dem Radbremszylinder 7 zugeordnet ist. In jedem der Bremsleitungszweige 13, 15 ist jeweils ein Einlaßventil 17, 19 in Form eines stromlos offenen 2/2-Wege-Magnetventils angeordnet, durch das der Bremsdruck der Radbremszylinder 5 bzw. 7 steuerbar ist. Von den Bremsleitungszweigen 13, 15 zweigt radbremszylinderseitig der Einlaßventile 17,19 jeweils ein Rückführleitungszweig 21,22 an Anschlußpunkten 20,23 ab. In jedem der Rückführleitungszweige 21, 22 ist jeweils ein Auslaßventil 24, 25 z. B. in Form eines stromlos geschlossenen 2/2-Wege-Magnetventils angeordnet, das den Druckabbau in den Radbremszylindern 5, 7 ermöglicht. Den Radbremszylindern 5, 7 abgewandt sind die Rückführleitungszweige 21, 22 stromabwärts der Auslaßventile 24, 25 an einem Anschlußpunkt 27 in eine gemeinsame Rückführleitung 29 zusammengeführt.

Die Rückführleitung 29 ist z. B. zwischen dem Anschlußpunkt 12 und dem Einlaßventil 17 an einem Anschlußpunkt 31 mit dem Bremsleitungszweig 13 verbunden. In der Rückführleitung 29 sind in Rückführströmungsrichtung zum Anschlußpunkt 31 hin hintereinander eine Speicherkammer 33, eine Rückförderpumpe 35, eine Dämpferkammer 36 und eine Drossel 37 angeordnet.

Bei Betätigung des Hauptbremszylinders 3 ist durch Verschieben von Druckmittelmengen durch die Bremsleitung 11 Bremsdruck in den Radbremszylindern 5 und 7 erzeugbar. In der Druckaufbauphase, in der Druck in den Radbremszylindern aufgebaut wird, befinden sich die Einlaßventile 17, 19 in Durchlaßstellung und die Auslaßventile 24, 25 in Sperrstellung. Droht bei einer Bremsung Blockiergefahr an wenigstens einem der Fahrzeugräder, so werden die Einlaßventile 17, 19 und die Auslaßventile 24, 25 der Blockierschutzeinrichtung nach einem bekannten adaptiven Regelalgorithmus mittels eines nicht dargestellten elektronischen Steuergerätes so angesteuert, daß in den Radbremszylindern eine entsprechend den Bremsbedingungen optimierte Bremsdruckmodulation abläuft. Wird z. B. der Druck des Druckmittels in den Radbremszylindern 5,7 abgebaut, um ein Blockieren der Fahrzeugräder zu verhindern, so werden die Einlaßventile 17, 19 geschlossen und die Auslaßventile 24, 25 geöffnet, so daß das Druckmittel in die Speicherkammer 33 strömt und ein schneller Druckabbau in den Radbremszylindern 5, 7 erfolgt. In dieser Druckabbauphase befinden sich also die Einlaßventile 17, 19 in Sperrstellung und die Auslaßventile 24, 25 in Durchlaßstellung. Die Rückförderpumpe 35 ist während der gesamten Blockierschutzfunktion eingeschaltet und fördert das Druckmittel aus der saugseitig der Rückförderpumpe 35 angeordneten Speicherkammer 33 z. B. in den Bremsleitungszweig 13. Die Dämpferkammer 36 auf der Druckseite der Rückförderpumpe 35 dient in Verbindung mit der Drossel 37 als hydraulischer Dämpfer. In einer Druckhaltephase, in der der Druck des Druckmittels in den Radbremszylindern 5, 7 konstant gehalten werden soll, sind sowohl die Einlaßventile 17, 19 als auch die Auslaßventile 24, 25 in Sperrstellung geschaltet.

In der Bremsleitung 11 ist z. B. zwischen Hauptbremszylinder 3 und Anschlußpunkt 12 eine Drucksteuereinrichtung 9 angeordnet, durch die der Druck des Druckmittels, beispielsweise einer handelsüblichen Bremsflüssigkeit, in den Radbremszylindern 5, 7 beeinflußbar ist. Die Drucksteuereinrichtung 9 besteht aus einem Magnetventil 39, das im stromlosen Zustand eine federbetätigte Stellung einnimmt, in der ein erstes integriertes federbelastetes Rückschlagventil wirksam ist, das den Durchfluß des Druckmittels erst bei einem vorbestimmten Differenzdruck zwischen der Hauptbremszylinderseite und der Radbremszylinderseite der Drucksteuereinrichtung 9 des Druckmittels freigibt, sowie einem parallel dazu angeordneten zweiten Rückschlagventil 40, das in entgegengesetzter Strömungsrichtung wirkt. Aufgabe der Drucksteuereinrichtung 9 ist es, das Blockieren der Hinterräder vor dem Blockieren der Vorderräder des Fahrzeuges bei einem Ausfall der Blockierschutzeinrichtung zu vermeiden, indem der Druck in den Radbremszylindern 5, 7 reduziert wird.

Im Normalfall, also bei intakter Blockierschutzeinrichtung, liegt an dem stromlos geschlossenen Magnetventil 39 der Drucksteuereinrichtung 9 eine Versorgungsspannung an, die das als 2/2-Wege-Ventil wirkende Magnetventil 39 in seiner Durchlaßstellung hält und die dafür sorgt, daß die Drucksteuereinrichtung 9 keinen Einfluß auf den Druck des Druckmittels in den Radbremszylindern 5, 7 ausübt. Die Drucksteuereinrichtung 9 übernimmt somit keine Funktionen der Blockierschutzeinrichtung.

In Abweichung von dem in der Figur 1 dargestellten Hydraulikschaltplan der Kraftfahrzeugbremsanlage 1 ist es aber auch möglich, jeweils eine Drucksteuereinrichtung 9 zwischen den Radbremszylindern 5 und 7 der Hinterräder des Fahrzeugs und den jeweiligen Anschlußpunkten 20 bzw. 23 der Bremsleitungszweige 13 bzw. 15 anzuordnen. Diese Anordnung ist z. B. bei Diagonal-Zweikreis-Bremsanlagen an den Radbremszylindern der Hinterräder zum Erhalten der Fahrstabilität des Fahrzeuges bei einer Betätigung der Bremsanlage im Falle eines Ausfalls der Blockierschutzeinrichtung erforderlich.

Bei einem Ausfall der Blockierschutzeinrichtung der hydraulischen Bremsanlage 1 dient die Drucksteuereinrichtung 9 dazu, ein frühzeitiges Blockieren der Hinterräder vor den Vorderrädern des Fahrzeuges zu verhindern und damit auch beim Abbremsen die Fahrstabilität des Fahrzeuges zu erhalten. Zu diesem Zweck wird bei einem Ausfall der Blockierschutzeinrichtung die Stromzufuhr zu der Drucksteuereinrichtung 9 unterbrochen und dadurch die federbetätigte Stellung zur Wirkung gebracht. Wird der Hauptbremszylinder 3 betätigt, so werden Druckmittelmengen durch die Bremsleitung 11 in die Drucksteuereinrichtung 9 geschoben. Übersteigt der Druck des Druckmittels auf der Hauptbremszylinderseite den radbremszylinderseitigen Druck in der Drucksteuereinrichtung 9 um einen charakteristischen, voreingestellten Druckwert des ersten federbelasteten Rückschlagventils der Drucksteuereinrichtung 9, so gibt das erste Rückschlagventil den Durchlaß für das Druckmittel in Richtung der Radbremszylinder 5, 7 frei. Der Betrag des Druckes des Druckmittels ist dabei radbremszylinderseitig gegenüber dem hauptbremszylinderseitigen Druck um den charakteristischen Druckwert des ersten Rückschlagventils vermindert.

Um ein Entspannen des Druckes in den Radbremszylindern 5 sowie 7 und damit ein Lösen der Hinterradbremsen des Fahrzeuges zu ermöglichen, ist in der Drucksteuereinrichtung 9 das zweite federbelastete Rückschlagventil 40 vorgesehen, das parallel zu dem 2/2-Wege-Magnetventil 39 geschaltet ist und ein Rückströmen des Druckmittels in Richtung des Hauptbremszylinders 3 erlaubt, wenn der hauptbremszylinderseitige Druck unter den radbremszylinderseitigen Druck fällt.

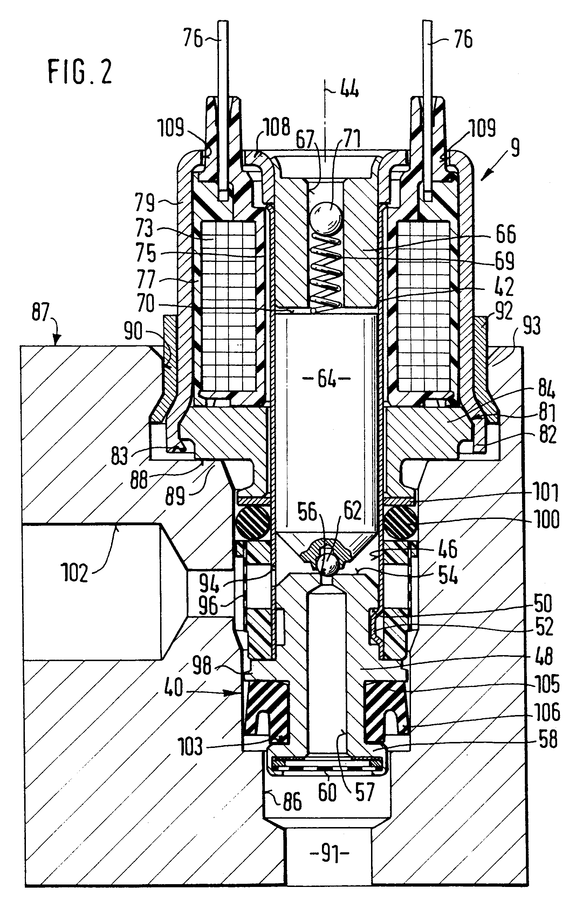

Figur 2 zeigt ein erstes Ausführungsbeispiel der Drucksteuereinrichtung 9, die als 2/2-Wege-Magnetventil ausgebildet ist und die Wirkung eines ersten federbelasteten Rückschlagventils sowie eines zweiten Rückschlagventils 40 beinhaltet. Das erste federbelastete Rückschlagventil wird auch als Überströmventil oder als Druckversatzventil bezeichnet. Die Drucksteuereinrichtung hat eine langgestreckte Gehäusehülse 42 mit einer konzentrisch zu einer Ventillängsachse 44 verlaufenden Längsbohrung 46. An dem einen Ende der Gehäusehülse 42 ragt ein Gehäusebauteil, das als Ventilsitzteil 48 bezeichnet ist, in axialer Richtung teilweise in die Längsbohrung 46. An dem Umfang des Ventilsitzteiles 48 ist in dem von der Gehäusehülse 42 umgebenen Bereich eine umlaufende Ringnut 50 ausgebildet. Die Gehäusehülse 42 hat beispielsweise drei Haltenasen 52, die in radialer Richtung nach innen weisen und in die Ringnut 50 des Ventilsitzteiles 48 eingepreßt sind, so daß zwischen Gehäusehülse 42 und Ventilsitzteil 48 eine einfach herstellbare Verbindung gebildet ist.

Das Ventilsitzteil 48 hat an seinem in die Gehäusehülse 42 ragenden Ende eine obere Stirnseite 54, die konzentrisch zu der Ventillängsachse 44 einen festen Ventilsitz 56 aufweist. Ausgehend von dem festen Ventilsitz 56 erstreckt sich in dem Ventilsitzteil 48 konzentrisch zu der Ventillängsachse 44 eine durchgehende, gestufte Durchgangsbohrung 57, die den Ventilsitz 56 an der oberen Stirnseite 54 mit einem unteren, der oberen Stirnseite 54 abgewandten Ende 58 des Ventilsitzteils 48 verbindet und ein Strömen des Druckmittels von dem unteren Ende 58 zu dem festen Ventilsitz 56 bzw. in umgekehrter Richtung ermöglicht. Zur Filtrierung des Druckmittels ist die Durchgangsöffnung 57 an dem unteren Ende 58 des Ventilsitzteils 48 durch einen Scheibenfilter 60 abgedeckt.

Mit dem festen Ventilsitz 56 des Ventilsitzteils 48 wirkt ein beispielsweise kugelförmiges Ventilschließglied 62 zusammen, das mit einem zylindrischen Anker 64 z. B. durch Löten, Schweißen oder Einpressen unmittelbar verbunden ist. Der Ventilsitz 56 und das Ventilschließglied 62 bilden ein Sitzventil. Der Anker 64 ist in der Längsöffnung 46 der Gehäusehülse 42 gleitbar gelagert.

An der dem Ventilsitzteil 48 abgewandten Seite des Ankers 64 weist die Drucksteuereinrichtung 9 konzentrisch zu der Ventillängsachse 44 einen Innenpol 66 mit einer durchgehenden Längsbohrung 67 auf, der mit der Gehäusehülse 42 an ihrem dem Ventilsitzteil 48 abgewandten Ende verbunden ist. In der Längsbohrung 67 ist eine Rückstellfeder 69 angeordnet, die mit ihrem einen Ende an einer dem Innenpol 66 zugewandten Stirnseite 70 des Ankers 64 anliegt. Mit ihrem anderen Ende liegt die Rückstellfeder 69 an einer in die Längsbohrung 67 des Innenpols 66 eingepreßten Einstellkugel 71 an. Die Einpreßtiefe der Einstellkugel 71 in die Längsbohrung 67 des Innenpols 66 bestimmt die Größe der auf den Anker 64 und damit auch auf das Ventilschließglied 62 wirkenden Rückstellkraft, die bestrebt ist, das Ventilschließglied 62 in Richtung des festen Ventilsitzes 56 zu bewegen.

Der Anker 64 und der Innenpol 66 sind zumindest teilweise in axialer Richtung durch eine Magnetspule 73 umgeben. Die Magnetspule 73 weist einen Spulenkörper 75, an den elektrische Anschlußstecker 76 mitangespritzt sind, sowie eine Kunststoffspulenumspritzung 77 auf. Ein topfförmiger Gehäusemantel 79 umgreift in axialer Richtung die Magnetspule 73 vollständig und einen dem Ventilsitzteil 48 zugewandt an die Magnetspule 73 angrenzend angeordneten Gehäuseflansch 81 teilweise. An einem dem Ventilschließglied 62 abgewandten Bodenteil 108 des Gehäusemantels 79 sind zwei Gehäusedurchbrüche 109 vorgesehen, die zur Durchführung der elektrischen Anschlußstecker 76 dienen. Der topfförmige Gehäusemantel 79 ist an seinem dem Ventilsitzteil 48 zugewandten Ende 82 z. B. mittels einer Bördelverbindung 83 mit einem Verbindungsflansch 84 des Gehäuseflanschteils 81 verbunden, wobei der Gehäusemantel 79 an seinem Ende 82 einen vergrößerten Durchmesser aufweist.

Die Drucksteuereinrichtung 9 ist beispielsweise in einer gestuften Aufnahmebohrung 86 eines Gehäuseblockes 87 angeordnet, wobei der topfförmige Gehäusemantel 79 mit den Anschlußsteckern 76 in axialer Richtung teilweise aus der Aufnahmebohrung 86 herausragt. Mit einer dem Ventilsitzteil 48 zugewandten Anlagestirnseite 88 des Gehäuseflanschteils 81 liegt die Drucksteuereinrichtung 9 an einem Halteabsatz 89 der gestuften Aufnahmebohrung 86 an. Die Aufnahmebohrung 86 weist an ihrem einen Ende 93, an dem die Drucksteuereinrichtung 9 in axialer Richtung über den Gehäuseblock 87 herausragt, eine Querschnittsverringerung 90 auf. In die Aufnahmebohrung 86 ist ausgehend von diesem Ende 93 ein Haltering 92 zwischen den Gehäusemantel 79 und die Wandung der Aufnahmebohrung 86 eingepreßt, der sich in Richtung der Ventillängsachse 44 zumindest im Bereich der Querschnittsverringerung 90 der Aufnahmebohrung 86 und des einen vergrößerten Durchmesser aufweisenden Endes 82 des Gehäusemantels 79 erstreckt und der eine kraft- und formflüssige Verbindung zwischen Drucksteuereinrichtung 9 und der Aufnahmebohrung 86 des Gehäuseblocks 87 bildet.

An ihrem anderen Ende weist die gestufte Aufnahmebohrung 86 einen gestuften Strömungsabschnitt 91 auf, der mit der Durchgangsbohrung 57 des Ventilsitzteils 48 in Verbindung steht und zur hauptbremszylinderseitigen Zufuhr bzw. Abfuhr des Druckmittels dient.

Die Wandung der Gehäusehülse 42 ist im Bereich zwischen dem Gehäuseflanschteil 81 und dem Ventilsitzteil 48 von beispielsweise einer Durchgangsöffnung 94 durchbrochen. An dem Umfang der Gehäusehülse 42 ist ein die Durchgangsöffnung 94 mit einem Filtersieb überdeckendes ringförmiges Filterelement 96 angeordnet, das zur Filtrierung des Druckmittels dient. Das Filterelement 96 stützt sich mit seinem einen, dem Ende 58 des Ventilsitzteils 48 zugewandten Ende an einem Halteflansch 98 des Ventilsitzteils 48 ab. Zwischen dem anderen Ende des ringförmigen Filterelementes 96 und dem Gehäuseflanschteil 81 ist an dem Umfang der Gehäusehülse 42 dem Filterelement 96 zugewandt ein Dichtring 100 und dem Gehäuseflanschteil 81 zugewandt ein Stützring 101 angeordnet.

In dem Gehäuseblock 87 ist z. B. senkrecht zu der Ventillängsachse 44 verlaufend ein gestufter Strömungskanal 102 ausgebildet, der im Bereich der Durchgangsöffnung 94 der Gehäusehülse 42 mit der Aufnahmebohrung 86 des Gehäuseblocks 87 in Verbindung steht und der radbremszylinderseitigen Abfuhr bzw. Zufuhr des Druckmittels aus der bzw. in die Druckregeleinrichtung 9 dient.

Zwischen dem Halteflansch 98 und einer am Ende 58 des Ventilsitzteils 48 ausgebildeten, in radialer Richtung nach außen weisenden Stützfläche 103 ist eine das zweite Rückschlagventil 40 bildende Manschette 105 an dem Umfang des Ventilsitzteils 48 angeordnet. Die Manschette 105 liegt mit einer der Stützfläche 103 zugewandten Dichtlippe 106 an der Wandung der Aufnahmebohrung 86 des Gehäuseblockes 87 an und ermöglicht ein Strömen des Druckmittels zwischen der Manschette 105 und der Wandung der Aufnahmebohrung 86 von dem Strömungskanal 102 in Richtung des Strömungsabschnittes 91 der Aufnahmebohrung 86, also zum Hauptbremszylinder 3 hin. Die Manschette 105 sperrt aber den Durchfluß für das Druckmittel von dem Strömungsabschnitt 91 der Aufnahmebohrung 86 in Richtung des Strömungskanals 102, also in umgekehrter Richtung.

Anhand der Figur 2 sei nun die Funktionsweise der Drucksteuereinrichtung 9 erläutert. Bei intakter Blockierschutzeinrichtung der Bremsanlage, also im Normalfall, liegt an den Anschlußsteckern 76 der Drucksteuereinrichtung 9 stets eine elektrische Spannung an, so daß die Magnetspule 73 erregt und das Ventilschließglied 62 entgegen der in Richtung des festen Ventilsitzes 56 wirkenden Federkraft der Rückstellfeder 69 von dem festen Ventilsitz 56 vollständig abgehoben und das Sitzventil in Durchlaßstellung ist. In dieser Druckaufbauphase kann das Druckmittel ungehindert von dem Strömungsabschnitt 91 der Aufnahmebohrung 86 des Gehäuseblocks 87 durch die Drucksteuereinrichtung 9 in den Strömungskanal 102 sowie in umgekehrter Richtung strömen.

Bei einem Defekt der Blockierschutzeinrichtung wird die Stromversorgung der Magnetspule 73 unterbrochen und damit das magnetische Feld aufgehoben. Die Federkraft der Rückstellfeder 69 sorgt dafür, daß sich der Durchlaß des Ventils schließt und daß das Ventilschließglied 62 mit der in Richtung des Ventilsitzes 56 wirkenden Federkraft gegen den festen Ventilsitz 56 gedrückt wird, das Magnetventil stromlos geschlossen, also in Sperrstellung ist. Wird nun im Falle der Bremsung der Hauptbremszylinder 3 betätigt, so wird eine Druckmittelmenge durch die Bremsleitung 11 über den Strömungsabschnitt 91 in die Drucksteuereinrichtung 9 geschoben. An einer Wirkfläche des Ventilschließgliedes 62, die durch die Anlage des Ventilschließgliedes an dem ringförmigen Ventilsitz 56 begrenzt ist, übt das Druckmittel in der Durchgangsöffnung 57 des Ventilsitzteiles 48 eine Druckkraft auf das Ventilschließglied 62 aus, die der Federkraft der Rückstellfeder 69 und dem radbremszylinderseitigen Druck in der Drucksteuereinrichtung 9 entgegengerichtet ist. Steigt der Differenzdruck des Druckmittels zwischen der Hauptbremszylinderseite und der Radbremszylinderseite der Drucksteuereinrichtung 9 über einen charakteristischen, voreingestellten Öffnungsdruck, der durch die Federkraft der Rückstellfeder 69 und die Wirkfläche des Sitzventiles vorgegeben ist, so daß die durch das Druckmittel auf das Ventilschließglied 62 in Richtung der Rückstellfeder ausgeübte Druckkraft größer ist als die in entgegengesetzter Richtung auf das Ventilschließglied 62 wirkende Federkraft, so hebt sich das Ventilschließglied 62 von dem festen Ventilsitz 56 ab und gibt den Durchlaß für das Druckmittel durch die Durchgangsöffnung 94 der Gehäusehülse 42 in den Strömungskanal 102 des Gehäuseblockes 87 frei. Der Druck des Druckmittels in dem Strömungskanal 102 ist aber um den charakteristischen, durch die Federkraft der Rückstellfeder 69 und die Wirkfläche des Sitzventiles vorgegebenen Öffnungsdruck des als erstes federbelastetes Rückströmventil wirkenden stromlosen Magnetventils 39 geringer als der Druck des Druckmittels in dem Strömungsabschnitt 91 der Aufnahmebohrung 86. Der Öffnungsdruck des ersten federbelasteten Rückschlagventils beträgt etwa zwischen 10 und 50 bar, beispielsweise 30 bar.

Wird der Druck des Druckmittels hauptbremszylinderseitig gesenkt, so schließt sich das Sitzventil unverzüglich, da die Federkraft der Rückstellfeder 69 das Ventilschließglied 62 gegen den festen Ventilsitz 56 drückt, sobald der auf die Wirkfläche des Ventilschließgliedes wirkende hauptbremszylinderseitige Druck nicht mehr um die Federkraft der Rückstellfeder 69 größer ist als der auf diese Wirkfläche in entgegengesetzter Richtung wirkende radbremszylinderseitige Druck in der Drucksteuereinrichtung 9. Das Sitzventil aus Ventilsitz 56 und Ventilschließglied 62 wirkt also als das erste Rückschlagventil der Drucksteuereinrichtung 9, welches auch als Überströmventil oder als Druckversatzventil bezeichnet wird. Fällt der hauptbremszylinderseitige Druck unter den radbremszylinderseitigen Druck, so löst sich die an der Wandung der Aufnahmebohrung 86 des Gehäuseblocks 87 anliegende Dichtlippe 106 der Manschette 105 von der Wandung und ermöglicht das Rückströmen des radbremszylinderseitigen Druckmittels an dem Umfang der Drucksteuereinrichtung 9 vorbei in Richtung des Hauptbremszylinders 3. Die Manschette 105 übernimmt damit die Funktion des zweiten Rückschlagventils 40.

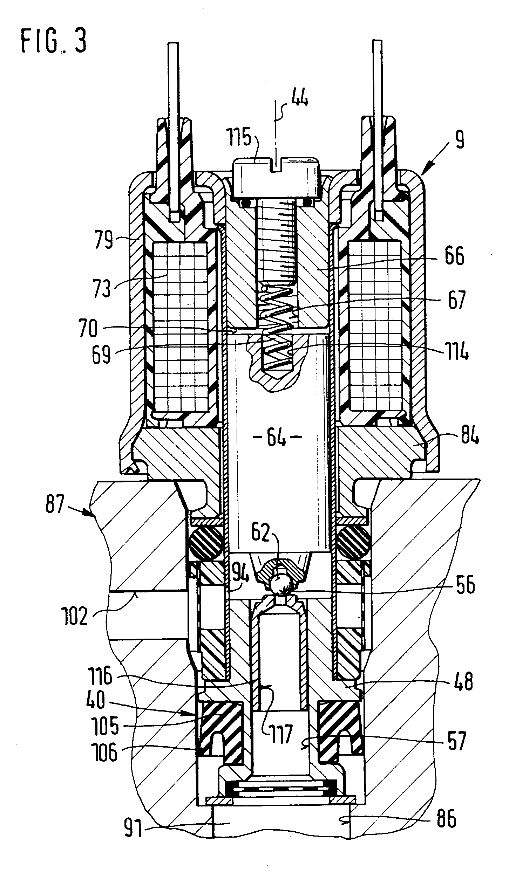

Figur 3 zeigt ein zweites Ausführungsbeispiel einer Drucksteuereinrichtung 9, die ebenfalls als 2/2-Wege-Magnetventil ausgebildet ist und die Wirkungsweise eines ersten federbelasteten Rückschlagventiles sowie eines zweiten Rückschlagventiles 40 beinhaltet. Gleiche und gleichwirkende Teile sind durch die gleichen Bezugszeichen gekennzeichnet wie in der Figur 2. Dabei entspricht das zweite Ausführungsbeispiel der Drucksteuereinrichtung 9 in wesentlichen Merkmalen und in der Funktionsweise der Drucksteuereinrichtung gemäß des ersten Ausführungsbeispiels. Zur Einstellung der in der Längsbohrung 67 des Innenpols 66 und in einer konzentrisch zu der Ventillängsachse 44 verlaufenden, von der dem Innenpol zugewandten Stirnseite 70 des Ankers 64 ausgehenden Sacklochbohrung 114 des Ankers 64 angeordneten Rückstellfeder 69 ist in die Längsbohrung 67 ausgehend von dem der Rückstellfeder 69 abgewandten Ende des Innenpols 66 eine Einstellschraube 115 eingeschraubt. Die Einschraubtiefe der Einstellschraube 115 in die Längsbohrung 67 des Innenpols 66 bestimmt die Größe der auf den Anker 64 und damit auf das Ventilschließglied 62 wirkenden Federkraft. In der Durchgangsöffnung 57 des Ventilsitzteils 48 ist eine Ventilsitzhülse 116 angeordnet und beispielsweise durch Einpressen unverschiebbar befestigt, die eine durchgehende gestufte und konzentrisch zu der Ventillängsachse 44 verlaufende Strömungsbohrung 117 und an ihrem dem Ventilschließglied 62 zugewandten Ende einen festen Ventilsitz 56 aufweist, der zusammen mit dem Ventilschließglied 62 das Sitzventil bildet. Die Drucksteuereinrichtung 9 ist in nicht dargestellter Weise an dem Gehäuseblock 87 befestigt, beispielsweise mittels einer Schraubverbindung.

Die Drucksteuereinrichtung 9 in Form eines 2/2-Wege-Magnetventils, die die Funktion eines ersten sowie eines zweiten Rückschlagventils aufweist, hat eine sehr einfache und kompakte Bauweise und ist auf einfache und kostengünstige Art und Weise herstellbar.

## Patentansprüche

1. Hydraulische Bremsanlage mit einer Blockierschutzeinrichtung, insbesondere für Kraftfahrzeuge, mit einer druckmittelführenden, zwischen einem Hauptbremszylinder und einem Radbremszylinder verlaufenden Leitung, und mit einer in der Leitung angeordneten Drucksteuereinrichtung, die einen festen Ventilsitz und ein gegenüber dem festen Ventilsitz bewegbares Ventilschließglied, das mittels eines aus einem Anker und einer Magnetspule bestehenden Magnetkreises betätigbar ist, sowie eine Rückstellfeder hat, die bestrebt ist, das Ventilschließglied in Richtung des festen Ventilsitzes zu bewegen, dadurch gekennzeichnet, daß die Drucksteuereinrichtung (9), deren fester Ventilsitz (56) hauptbremszylinderseitig und deren Ventilschließglied (62) radbremszylinderseitig angeordnet sind, im unerregten Zustand der Magnetspule (73) als erstes federbelastetes Rückschlagventil wirkt, dessen Ventilschließglied (62) sich nur dann von dem festen Ventilsitz (56) abhebt und den Durchlaß für das Druckmittel freigibt, wenn die durch den Differenzdruck des Druckmittels zwischen der Hauptbremszylinderseite und der Radbremszylinderseite der Drucksteuereinrichtung (9) auf das Ventilschließglied (62) ausgeübte Kraft größer ist als die Federkraft der Rückstellfeder (69).

2. Hydraulische Bremsanlage nach Anspruch 1, dadurch gekennzeichnet, daß die Drucksteuereinrichtung (9) parallel zu Ventilsitz (56) und Ventilschließglied (62) ein zweites Rückschlagventil (40) mit Durchlaßrichtung vom Radbremszylinder (5, 7) zum Hauptbremszylinder (3) aufweist, das ein Rückströmen des Druckmittels von der Radbremszylinderseite zu der Hauptbremszylinderseite der Drucksteuereinrichtung (9) ermöglicht.

3. Hydraulische Bremsanlage nach Anspruch 2, dadurch gekennzeichnet, daß die Drucksteuereinrichtung (9) wenigstens teilweise von einer Aufnahmebohrung (86) eines Gehäuseblocks (87) aufgenommen ist und die Aufnahmebohrung (86) einen Abschnitt der Bremsleitung (11) bildet und daß das zweite Rückschlagventil (40) als Manschette (105) ausgebildet ist, die an dem Umfang eines Gehäusebauteils (Ventilsitzteil 48) der Drucksteuereinrichtung (9) anliegt und mit einer Dichtlippe (106) an der Wandung der Aufnahmebohrung (86) angreift.

4. Hydraulische Bremsanlage nach Anspruch 1, dadurch gekennzeichnet, daß die Federkraft der am Anker (64) angreifenden Rückstellfeder (69) mittels einer in eine Längsbohrung (67) der Drucksteuereinrichtung (9) einpreßbaren Einstellkugel (71) einstellbar ist.

5. Hydraulische Bremsanlage nach einem der Ansprüche 1 bis 3, deren Drucksteuereinrichtung eine Gehäusehülse und ein Ventilsitzteil aufweist, dadurch gekennzeichnet, daß das Ventilsitzteil (48) zumindest teilweise von der Gehäusehülse (42) umgeben ist und an seinem Umfang eine umlaufende Ringnut (50) hat, in die wenigstens drei in radialer Richtung nach innen weisende Haltenasen (52) der Gehäusehülse (42) ragen.

6. Hydraulische Bremsanlage nach Anspruch 1, dadurch gekennzeichnet, daß Ventilschließglied (62) und Anker (64) unmittelbar miteinander verbunden sind.
